# EUROPÄISCHE PATENTSCHRIFT

(11) **EP 2 565 334 B1**
(45) Veröffentlichungstag und Bekanntmachung des Hinweises auf die Patenterteilung: **05.10.2016**
(21) Anmeldenummer: 11007087.7
(22) Anmeldetag: 31.08.2011
(51) Int. Cl.: E02F 9/22, H02K 9/19

(54) **Baumaschine mit ölgekühltem Generator**
Construction machine with oil-cooled generator
Engin doté d'un générateur refroidi par huile

(43) Veröffentlichungstag der Anmeldung: 06.03.2013
(73) Patentinhaber: Joseph Vögele AG, 67067 Ludwigshafen (DE)
(72) Erfinder: Buschmann, Martin, Dipl.-Ing., 67435 Neustadt (DE); Diesner, Michael, 69259 Wilhelmsfeld (DE); Stumpf, Philipp, 69121 Heidelberg (DE)
(74) Vertreter: Grünecker Patent- und Rechtsanwälte PartG mbB

(56) Entgegenhaltungen:
- EP-A1- 1 199 410
- EP-A1- 2 256 247
- DE-A1-102007 012 702
- JP-A- 2010 053 596
- JP-A- 2010 168 825
- US-A1- 2009 102 298

## Beschreibung

Die vorliegende Erfindung bezieht sich auf eine Baumaschine mit einem elektrischen Generator gemäß dem Oberbegriff des Anspruchs 1. Bei der Baumaschine kann es sich beispielsweise um einen Straßenfertiger oder Beschicker handeln.

Aus der EP 1 118 714 A2 ist bekannt, dass es im Straßenfertiger elektrische Verbraucher mit hoher elektrischer Leistungsaufnahme gibt. Dazu zählen beispielsweise die Heizeinrichtungen bzw. Heizstäbe der Einbaubohle zum Heizen des Asphaltmischguts. Für die Energieversorgung dieser Verbraucher ist ein leistungsstarker elektrischer Generator notwendig, der üblicherweise an einen Nebenantrieb, zum Beispiel ein Pumpenverteilergetriebe, gekoppelt ist und von diesem angetrieben wird. Der Nebenantrieb wird von einem Primärantrieb, beispielsweise einem Dieselmotor, angetrieben. Ein solcher Generator erzeugt aufgrund der hohen elektrischen Leistung während des Betriebs eine hohe Eigenwärme, weshalb dem Generator mittels eines Lüfters Kühlluft zugeführt wird. Nachteilig daran ist, dass der Lüfter einen gewissen Bauraum am Generator und innerhalb der Baumaschine beansprucht und die Kühlleistung begrenzt ist.

Es ist weiter bekannt, dass in Kraft- und Nutzfahrzeugen eine andere Art elektrischer Generatoren, sogenannte Lichtmaschinen, zur Erzeugung der Bordnetzspannung eingesetzt werden. Weiter ist bekannt, dass auch diese elektrischen Generatoren während des Betriebs verschiedenen Wärmequellen ausgesetzt sind oder selbst Wärme erzeugen, weshalb sie zeitweise oder kontinuierlich gekühlt werden müssen. Einerseits befindet sich der Generator meist in der Nähe eines Verbrennungsmotors, andererseits erzeugt er während des Betriebs eine gewisse Eigenwärme. In Kraftfahrzeugen kann eine Luftkühlung des Generators ausreichend sein, in Fahrzeugen mit höherer Bordnetzspannung ist eine Flüssigkeitskühlung empfehlenswert. Ein flüssigkeitsgekühlter Generator ist beispielsweise aus der DE 30 28 177 C2 bekannt. Darin wird ein Generator mit einer Rotorwicklung mit Kühlkanälen in den Leitern beschrieben. Die Kühlkanäle können von Kühlwasser durchströmt werden.

Ein weiterer flüssigkeitsgekühlter Generator ist in der DE 198 54 464 C2 beschrieben. Der Generator ist in einem Gehäuse angeordnet, das einen ringförmigen Spaltraum für Kühlflüssigkeit umfasst.

Nachteilig am zitierten Stand der Technik ist, dass meist elektrisch leitfähiges Wasser in der Nähe elektrischer Bauteile eingesetzt wird.

Aus der DE 197 50 379 B4 ist eine Baueinheit mit einem elektrischen Generator und einem hydraulischen Pumpenaggregat bekannt, bei dem das hydraulische Pumpenaggregat zur Kühlung des Generators vorgesehen ist. Nachteilig daran ist, dass der Generator und das Pumpenaggregat eine gemeinsame Baueinheit bilden und deshalb nur schwer räumlich trennbar sind.

Die EP 1 199 410 A1 beschreibt eine Baumaschine mit einer hydraulischen Pumpe, die von einem Elektromotor angetrieben wird, um beispielsweise eine Batterie und einen Generator zu kühlen. Der Generator der Baumaschine wird durch einen Verbrennungsmotor angetrieben.

Die JP 2010 168825 A offenbart ein Kühlsystem für einen Generator. Das Kühlsystem umfasst eine Pumpe, die mit um den Generator gewickelten Leitungen verbunden ist, durch die Kühlflüssigkeit gepumpt wird.

Die JP 2010 053596 A beschreibt eine Baumaschine mit einem Verbrennungsmotor, der über einen Generator eine hydraulische Pumpe antreibt. Die hydraulische Pumpe ist mit einem Leitungssystem ausgestattet, welches zur Kühlung des Generators vorgesehen ist.

Die DE 10 2007 012 702 A1 beschreibt ein Verfahren zur Regelung eines Generators, dessen Sollausgangsspannung schrittweise reduzierbar ist, um eine momentan am Generator vorliegende Ist-Temperatur relativ zu einem Temperaturschwellenwert zu reduzieren.

Die EP 2 256 247 A1 offenbart einen Generator einer Baumaschine, welcher sandwichartig zwischen einem Verbrennungsmotor und einem Pumpenverteilergetriebe angeordnet ist, um eine kompakte Bauweise sicherzustellen.

Der Erfindung liegt die Aufgabe zugrunde, eine Baumaschine mit einem wirksam gekühlten Generator zur Verfügung zu stellen, wobei Mittel zur Kühlung des Generators an bereits in der Baumaschine vorliegende Systemkomponenten koppelbar sind, sodass die gesamte Anzahl an Betriebskomponenten der Baumaschine sowie deren Gesamtgewicht reduziert werden kann.

Diese Aufgabe wird erfindungsgemäß gelöst durch eine Baumaschine mit einem elektrischen Generator mit den Merkmalen des Anspruchs 1. Vorteilhafte Weiterbildungen der Erfindung sind in den Unteransprüchen angegeben.

Erfindungsgemäß umfasst eine Baumaschine mit einem elektrischen Generator ein Hydraulikölsystem für Hydraulikfunktionen, wobei das Hydraulikölsystem zur Kühlung des Generators vorgesehen ist. Das Hydrauliköl hat zwar eine geringere Wärmekapazität als beispielsweise Wasser, wodurch das Öl im Vergleich zum Wasser weniger Wärme speichert. Vorteilhaft an der Verwendung von Hydrauliköl ist jedoch dessen hoher Siedepunkt im Vergleich zum Wasser, wodurch keine Additive beigemischt werden müssen. Ein weiterer Vorteil des Öls ist dessen gute elektrische Isoliereigenschaft, wodurch sich eine Leckage nicht negativ auf den elektrischen Generator auswirkt. Da das Hydraulikölsystem unabhängig vom elektrischen Generator in der Baumaschine vorgesehen ist und weitere Funktionen innerhalb der Baumaschine erfüllt, ist kein separates Kühlsystem für den elektrischen Generator notwendig. Des Weiteren ist der Wärmeeintrag in das Hydrauliksystem und damit dessen Temperatur meist niedriger als in einem Kühlsystem für einen Verbrennungsmotor.

Vorzugsweise weist der Generator für die Kühlung ein Rohrleitungssystem an seiner Außenoberfläche auf, wobei das Rohrleitungssystem an das Hydraulikölsystem angeschlossen ist. Je weitläufiger das Rohrleitungssystem ist, desto größer ist die wärmeleitende Oberfläche des Rohrleitungssystems und damit die Kühlleistung für den Generator.

Für eine größtmögliche Kühlleistung des Systems ist das Rohrleitungssystem aus einem gut wärmeleitfähigen Material, vorzugsweise Stahl, Edelstahl, Aluminium oder Kupfer gefertigt.

Um eine möglichst große Oberfläche des für die Kühlung vorgesehenen Rohrleitungssystems zu erreichen, hat das Rohrleitungssystem erfindungsgemäß eine Wendelform. Als besonders vorteilhaft hat sich ein Doppelmantel erwiesen, beispielsweise eine Halbrohrschlange. Um zu vermeiden, dass bei einem Kaltstart, bei dem das Öl eine hohe Viskosität aufweist, das gesamte Öl unter hohem Druck durch das Rohrleitungssystem des Generators gefördert wird, ist bei der Erfindung ein Druckbegrenzer im Rohrleitungssystem des Generators vorgesehen.

Eine besonders vorteilhafte Variante der Erfindung sieht eine Regeleinrichtung für den Generator vor, die unter anderem dazu konfiguriert ist, die Leistung des Generators zu regeln. So kann beispielsweise die Leistungsaufnahme des Generators bei hohen Temperaturen im oder um den Generator herum entsprechend reduziert werden.

Eine weitere vorteilhafte Variante der Erfindung sieht einen Öltank vor, der das Hydrauliköl aus dem Rohrleitungssystem des Generators aufnimmt, wobei der Öltank weiter dazu eingerichtet ist, das Hydrauliköl aus dem Hydrauliksystem aufzunehmen. Die Nutzung eines gemeinsamen Öltanks spart Bauraum ein, so dass die Baumaschine insgesamt kompakter konstruiert werden kann.

Besonders vorteilhaft ist es, wenn für die Kühlung des Hydrauliköls des Rohrleitungssystems und/oder des Hydrauliköls des Hydrauliksystems ein Wärmetauscher vorgesehen ist. Der Wärmetauscher kann dabei als reiner Kühler eingesetzt werden und die Wärme des Hydrauliköls an die Umgebung abgeben. Weiter wäre es denkbar, dass der Wärmetauscher an ein Heizungssystem der Baumaschine angeschlossen ist und die Wärme des Hydrauliksystems zum Heizen anderer Komponenten der Baumaschine verwendet wird.

Für einen effektiven und sicheren Betrieb des Generators kann es zweckmäßig sein, wenn eine Einrichtung für die Überwachung des Generators vorgesehen ist, wobei die Einrichtung idealerweise für das Zusammenwirken mit der Regeleinrichtung des Generators ausgebildet ist. So können unsichere und ineffiziente Betriebszustände des Generators diagnostiziert und darauf mit Ersatzmaßnahmen reagiert werden. Beispielsweise könnte die Leistungsaufnahme des Generators reduziert werden.

Es hat sich als besonders effektiv herausgestellt, wenn das Rohrleitungssystem in ein Gehäuse des Generators integriert ist, da Luftspalte zwischen dem Rohrleitungssystem und dem Generator vermieden werden. Dies kann beispielsweise durch ein Eingießen des Rohrleitungssystems in das Gehäuse des Generators realisiert werden.

Die Erfindung sieht vor, dass der Generator für den Antrieb durch einen Verbrennungsmotor angetriebenen Nebenantrieb eingerichtet ist. Da der Verbrennungsmotor meist den Primärantrieb einer Baumaschine darstellt, kann der Generator so während des gesamten Betriebs der Baumaschine Elektrizität erzeugen. Darüber hinaus vermeidet der Antrieb des Generators mit einem zwischen dem Verbrennungsmotor und dem Generator angeordneten Nebenantrieb Drehmomentspitzen an der Generatoreingangswelle und erlaubt das Festlegen einer geeigneten Betriebsdrehzahl für den Generator.

Um einen konstanten Druck im Hydrauliksystem und dem Rohrleitungssystem des Generators zu erzeugen, ist bei der Erfindung eine in dem Rohrleitungssystem druckerzeugende Ölpumpe vorgesehen, wobei die Ölpumpe weiter dazu eingerichtet ist, mit dem Hydrauliksystem zusammenzuwirken. So kann für das Hydrauliksystem und das Rohrleitungssystem des Generators eine gemeinsame Ölpumpe verwendet werden, wodurch eine zusätzliche Komponente und damit Bauraum eingespart werden kann.

Erfindungsgemäß ist der mit dem Verbrennungsmotor verbundene Nebenantrieb für den Antrieb der Ölpumpe vorgesehen. So erzeugt die Ölpumpe während des gesamten Betriebs der Baumaschine den Öldruck für das Hydrauliksystem der Baumaschine und das Rohrleitungssystem des Generators.

Bei der Erfindung wird die Ölpumpe vom Nebenantrieb direkt betrieben, wobei optional zwischen dem Nebenantrieb und der Ölpumpe eine schaltbare Kupplung vorgesehen sein kann. So kann der Antrieb der Ölpumpe vom Verbrennungsmotor entkoppelt werden, was die Schleppverluste am Verbrennungsmotor reduziert. Damit kann ein permanenter Betrieb der Ölpumpe vermieden werden und vielmehr ein situatives Aufbauen des Öldrucks sowohl im Hydrauliksystem, als auch im Rohrleitungssystem des Generators erreicht werden.

Im Folgenden werden vorteilhafte Ausführungsbeispiele der Erfindung anhand einer Zeichnung näher erläutert. Im Einzelnen zeigen:
- Figur 1: eine erfindungsgemäße Baumaschine in der Seitenansicht,
- Figur 2: eine schematische Darstellung einer erfindungsgemäßen Baumaschine mit einem elektrischen Generator.

Gleiche Komponenten sind in den Figuren durchgängig mit gleichen Bezugszeichen versehen.

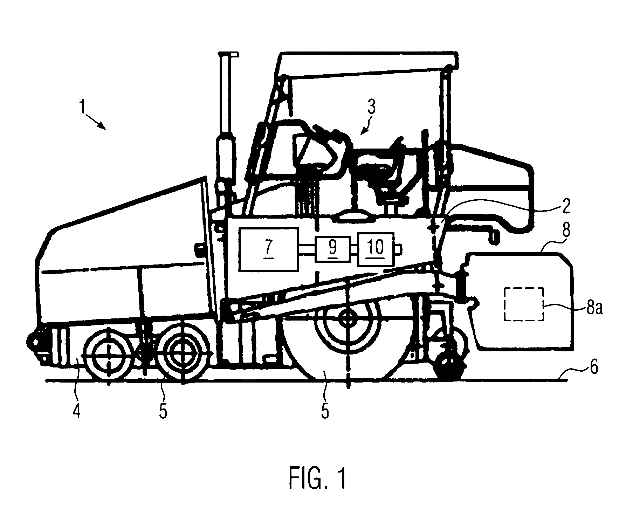

Figur 1 zeigt eine erfindungsgemäße Baumaschine 1 in der Seitenansicht, wobei die Baumaschine 1 hier ein Straßenfertiger ist.

Die Baumaschine 1 verfügt über einen Aufbau 2, der einen Bedienstand 3 aufnimmt. Der Aufbau 2 wird von einem Fahrgestell 4 getragen. Das Fahrgestell 4 überträgt Antriebskräfte mittels Rädern 5 oder Raupen (nicht dargestellt) auf die Fahrbahn 6. Für die Erzeugung der Antriebskräfte verfügt der Aufbau 2 über einen Verbrennungsmotor 7 als Primärantriebsquelle, der in diesem Beispiel ein Dieselmotor ist. Am hinteren Bereich des Aufbaus 2 ist eine Einbaubohle 8 mit einer Heizeinrichtung 8a montiert.

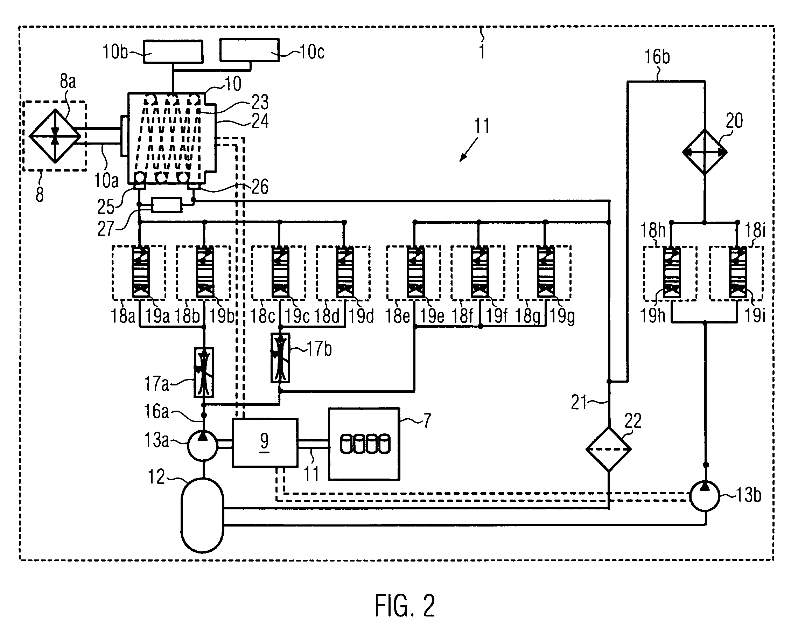

Mit der Kurbelwelle des Verbrennungsmotors 7 ist ein Nebenantrieb 9, in diesem Ausführungsbeispiel ein Pumpenverteilergetriebe, verbunden. Mit einem Ausgang des Nebenantriebs 9 ist die Antriebswelle eines elektrischen Generators 10 über einen Riemenantrieb 11, einer Gelenkwelle oder auch direkt mit dem Nebenantrieb verbunden, um eine Spannung für leistungsstarke Verbraucher der Baumaschine 1, beispielsweise die Heizeinrichtung 8a der Einbaubohle 8, zu erzeugen. Die vom Generator 10 erzeugte Betriebsspannung beträgt etwa 400 V. Die Funktion des Generators 10 innerhalb der Baumaschine 1 wird nachfolgend unter Bezug auf die Figur 2 beschrieben.

Figur 2 stellt die erfindungsgemäße Baumaschine 1 mit dem elektrischen Generator 10 schematisch dar. Der Generator 10 ist mit elektrischen Leitungen 10a an leistungsstarke Verbraucher, zum Beispiel die Heizeinrichtung 8a der Einbaubohle 8 angeschlossen. Die Heizeinrichtung 8a ist für das Heizen eines Asphaltmischguts bestimmt. Die elektrische Leistungsaufnahme der Heizeinrichtung 8a ist dabei hauptsächlich von der Breite der Einbaubohle 8 und optionalen, zusätzlich angeschlossenen Verbrauchern. Der Generator 10 verfügt über eine Regeleinrichtung 10b und eine Überwachungseinrichtung 10c.

Die Baumaschine 1 verfügt weiter über ein Hydrauliksystem 11, das verschiedene Hydraulikfunktionen für die Baumaschine 1 ausführt, beispielsweise das Verstellen von Aktuatoren. Das wenigstens zwei unterschiedliche Kreisläufe umfassende Hydrauliksystem 11 weist einen für beide Kreisläufe gemeinsamen Öltank 12 auf, der als Speicher für Hydraulikflüssigkeit dient. Die Hydraulikflüssigkeit ist in diesem Beispiel ein Hydrauliköl, da dieses gute Schmiereigenschaften und eine geeignete Viskosität besitzt.

Das Hydrauliköl wird von zwei an den Öltank 12 angeschlossenen Pumpen 13a, 13b aus dem Öltank 12 gefördert, von denen jeweils eine für die zwei unterschiedlichen Kreisläufe des Hydrauliksystems 11 vorgesehen ist. Die Hydraulikpumpen 13a, 13b erzeugen dabei einen kontinuierlichen Volumenstrom und weisen eine für diese Aufgabe geeignete Bauform auf. Der Antrieb der Pumpen 13a, 13b erfolgt jeweils direkt durch den Nebenantrieb 9. Das heißt, dass die Pumpen 13a, 13b während des Betriebs des Verbrennungsmotors 7 permanent Hydrauliköl aus dem Öltank 12 fördern können und so einen weitgehend konstanten Druck im Hydrauliksystem 11 erzeugen.

Das Hydrauliksystem 11 verfügt weiter über zwei Stromregelventile 17a, 17b, die den Ölfluss konstant auf einen festlegbaren Wert zwischen 4 und 10 Litern pro Minute, vorzugsweise jedoch etwa 8 Liter pro Minute, regeln.

Das Hydrauliksystem 11 erfüllt verschiedene Hydraulikfunktionen für die Baumaschine 1. Dafür umfasst das Hydrauliksystem 11 über daran angeschlossene hydraulische Arbeitskomponenten 18a bis 18i, z.B. Verstellzylinder für die Einbaubohle 8 oder das Fahrwerk. Jede Arbeitskomponente 18a bis 18i umfasst dabei jeweils ein elektrisch betätigbares Ventil 19a bis 19i. In diesem Ausführungsbeispiel sind die Arbeitskomponenten 18a bis 18g im Kreislauf des Leitungssystems 16a und die Arbeitskomponenten 18h, 18i im Kreislauf des Leitungssystems 16b angeordnet.

Die Arbeitskomponenten 18a bis 18g benötigen einen konstanten Volumenstrom, weshalb zwischen der Pumpe 13a und den Arbeitskomponenten 18a bis 18g die beiden Stromregelventile 17a, 17b im Leitungssystem 16a angeordnet sind. Die Arbeitskomponenten 18h, 18i benötigen keinen konstanten Volumenstrom, so dass zwischen der Pumpe 13b und den Arbeitskomponenten 18h, 18i kein Strömungsregelungsventil notwendig ist. Zwischen den hydraulischen Arbeitskomponenten 18h, 18i und dem Öltank 12 befindet sich im Rücklauf des Leitungssystems 16b ein Wärmetauscher 20, in diesem Beispiel ein Kühler, um die Temperatur des durch die hydraulischen Arbeitskomponenten 18h, 18i erwärmten Hydrauliköls zu beeinflussen. Eine Rücklaufleitung 21 mit einem Filter 22 verbindet die Rückläufe der Leitungssysteme 16a, 16b mit dem Öltank 12.

Der Generator 10 verfügt über ein wendelförmiges Rohrleitungssystem 23, das in ein Gehäuse 24 des Generators 10, vorzugsweise in Form eines Doppelmantels, eingegossen ist. Das Rohrleitungssystem 23 ist mit einem Hydraulikanschluss 25 an den Vorlauf der Hydraulikleitung 16a des Hydrauliksystems 11 angeschlossen. Durch die Regelung des Strömungsregelungsventils 17a herrscht ein konstanter Öldurchfluss im Rohrleitungssystem 23 des Generators 10. An einem Ende des Rohrleitungssystems 23 ist ein weiterer Hydraulikanschluss 26 vorgesehen, der mit dem Rücklauf der Hydraulikleitung 16a verbunden ist. Dieser ist als Rücklauf mit dem Öltank 12 verbunden, so dass das Hydrauliköl in den Öltank 12 zurückfließt.

Zur Begrenzung des Systemdrucks im Rohrleitungssystem 23 ist ein Druckbegrenzer 27 vorgesehen. In diesem Ausführungsbeispiel ist der Druckbegrenzer 27 ein Druckbegrenzungsventil, umfassend einen Bypass mit Rückschlagventil.

Die Kühlung des elektrischen Generators 10 innerhalb der Baumaschine 1 kann wie nachfolgend beschrieben ablaufen.

In der Baumaschine 1 kann es zu Beginn eines Arbeitseinsatzes notwendig sein, dass das Hydrauliksystem 11 zügig auf eine Betriebstemperatur gebracht wird. Beispielsweise erreicht das Hydrauliköl erst bei etwa 70 °C eine für die meisten Komponenten des Hydrauliksystems 11 ideale Viskosität. Das in das Gehäuse 24 des Generators 10 eingegossene, wendelförmige Rohrleitungssystem 23 wirkt in diesem Betriebszustand der Baumaschine 1 unterstützend auf das Hydrauliksystem 11, da es mit der vom Generator 10 erzeugten Wärme das Hydrauliköl zusätzlich aufheizt.

Das Hydrauliköl wird während des Betriebs des Verbrennungsmotors 7 bzw. des Nebenantriebs 9 von der Pumpe 13a sowohl durch das Hydrauliksystem 11, als auch durch das wendelförmige Rohrleitungssystem 23 des Generators 10 in einer weitgehend konstanten Menge gefördert.

Durch den Energieeintrag der Arbeitskomponenten 18a bis 18i und die erzeugte, an das Hydrauliköl abgegebene, Eigenwärme des Generators 10 wird das Hydrauliköl während des weiteren Betriebs der Baumaschine 1 stark erwärmt. Der im Rücklauf des Leitungssystems 16b angeordnete Kühler 20 ermöglicht eine Wärmeabgabe vom Hydrauliköl an die Umgebung, so dass die Temperatur des Hydrauliköls im Leitungssystem 16b gesenkt wird.

Da das so gekühlte Hydrauliköl aus dem Kreislauf mit dem Leitungssystem 16b des Hydrauliksystems 11 in den gemeinsamen Öltank 12 fließt und sich darin mit dem ungekühlten Hydrauliköl aus dem Kreislauf des Rohrleitungssystems 16a des Generators 10 bzw. der Arbeitskomponenten 18a bis 18g im Öltank 12 vermischt, wird das Hydrauliköl vom Generator 10 gekühlt, bevor es von der Pumpe 13a erneut gefördert und dem Rohrleitungssystem 23 zugeführt wird. Ist die Kühlung des Generators 10 durch das Hydrauliköl nicht ausreichend und wird dies von der Überwachungseinrichtung 10c detektiert, kann die Regeleinrichtung 10b die Leistungsaufnahme des Generators 10 begrenzen, wodurch der Generator 10 weniger Eigenwärme erzeugt.

Ausgehend von dem dargestellten Ausführungsbeispiel kann eine nicht zur Erfindung gehörende Baumaschine 1 mit elektrischem Generator 10 auf vielfache Weise abgewandelt werden. Beispielsweise könnten die Pumpen 13a, 13b anstatt vom Verbrennungsmotor 7 bzw. des Nebenantriebs 9 von einem separat in der Baumaschine 1 angeordneten Elektromotor angetrieben werden. Somit würden die Ölpumpen 13a, 13b bedarfsgerecht angesteuert werden, und nicht permanent Öl durch das Hydrauliksystem 11 und das Rohrleitungssystem 23 des Generators 10 fördern. Dies würde eine besonders vorteilhafte Kombination mit einem Motor-Start-Stopp-System ermöglichen.

Erfindungsgemäß ist das wendelförmige Rohrleitungssystem 23 des Generators 10 an einen weiteren Vorwärmkreislauf (nicht gezeigt) angeschlossen, um den Generator 10 bei kalten Außentemperaturen zügiger auf eine geeignete Betriebstemperatur zu erwärmen.

## Patentansprüche

1. Baumaschine (1) mit einem elektrischen Generator (10), wobei die Baumaschine (1) weiter ein Hydraulikölsystem (11) für Hydraulikfunktionen umfasst, wobei das Hydraulikölsystem (11) zur Kühlung des Generators (10) vorgesehen ist, wobei der Generator (10) für die Kühlung an seiner Außenoberfläche ein Rohrleitungssystem (23) aufweist, wobei das Rohrleitungssystem (23) an das Hydraulikölsystem (11) angeschlossen ist, wobei in dem Hydraulikölsystem (11) eine druckerzeugende Ölpumpe (13a) vorgesehen ist, wobei die Ölpumpe (13a) dazu eingerichtet ist, mit dem Hydraulikölsystem (11) zusammenzuwirken, wobei die Ölpumpe (13a) zur Kühlung des Generators (10) dazu ausgebildet ist, über das Hydraulikölsystem (11) durch das daran angeschlossene Rohrleitungssystem (23) des Generators (10) Hydrauliköl zu fördern, wobei der Generator (10) für den Antrieb durch einen Verbrennungsmotor (7) eingerichtet ist, wobei in dem Rohrleitungssystem (23) mindestens ein Druckbegrenzer (27) vorgesehen ist, und wobei das Rohrleitungssystem (23) eine Wendelform aufweist,
**dadurch gekennzeichnet, dass**
der Verbrennungsmotor (7) funktional mit einem Nebenantrieb (9) verbunden ist, der sowohl für den Antrieb des Generators (10), als auch für den Antrieb der Ölpumpe (13a) vorgesehen ist, und
das wendelförmige Rohrleitungssystem (23) des Generators (10) an einen Vorwärmkreislauf angeschlossen ist, um den Generator (10) bei kalten Außentemperaturen zügiger auf eine geeignete Betriebstemperatur zu erwärmen.

2. Baumaschine nach Anspruch 1, **dadurch gekennzeichnet, dass** das Rohrleitungssystem (23) aus einem wärmeleitfähigen Material, vorzugsweise Stahl, Edelstahl, Aluminium oder Kupfer, gefertigt ist.

3. Baumaschine nach einem der vorangehenden Ansprüche, **dadurch gekennzeichnet, dass** das Rohrleitungssystem (23) ein Doppelmantel an der Außenoberfläche des Generators (10) ist.

4. Baumaschine nach einem der vorangehenden Ansprüche, **dadurch gekennzeichnet, dass** ein Öltank (12) vorgesehen ist, der das Hydrauliköl aufnimmt, wobei der Öltank (12) weiter dazu eingerichtet ist, das Hydrauliköl aus dem Hydraulikölsystem (11) aufzunehmen.

5. Baumaschine nach einem der vorangehenden Ansprüche, **dadurch gekennzeichnet, dass** für die Kühlung des Hydrauliköls des Rohrleitungssystems (23) und/oder des Hydrauliköls des Hydraulikölsystems (11) ein Wärmetauscher (20) vorgesehen ist.

6. Baumaschine nach einem der vorangehenden Ansprüche, **dadurch gekennzeichnet, dass** für den Generator (10) eine Regeleinrichtung (10b) vorgesehen ist, die dazu konfiguriert ist, die Leistung des Generators (10) zu regeln.

7. Baumaschine nach Anspruch 6, **dadurch gekennzeichnet, dass** eine Einrichtung (10c) für die Überwachung des Generators (10) vorgesehen ist, wobei die Einrichtung (10c) für das Zusammenwirken mit der Regeleinrichtung (10b) ausgebildet ist.

8. Baumaschine nach einem der vorangehenden Ansprüche, **dadurch gekennzeichnet, dass** das Rohrleitungssystem (23) in ein Gehäuse (24) des Generators (10) integriert ist.

## Claims

1. Construction machine (1) with an electric generator (10), wherein the construction machine (1) further comprises a hydraulic oil system (11) for hydraulic functions, wherein the hydraulic oil system (11) is provided for cooling the generator (10), wherein for cooling, the generator (10) has on its outer surface a pipe system (23), wherein the pipe system (23) is connected to the hydraulic oil system (11), wherein a pressure-generating oil pump (13a) is provided in the hydraulic oil system (11), wherein the oil pump (13a) is set up to interact with the hydraulic oil system (11), wherein for cooling the generator (10) the oil pump (13a) is configured to convey hydraulic oil via the hydraulic oil system (11) through the pipe system (23), which is connected thereto, of the generator (10), wherein the generator (10) is set up to be driven by a combustion engine (7), wherein at least one pressure limiter (27) is provided in the pipe system (23), and wherein the pipe system (23) has a coil shape,
**characterized in that**
the combustion engine (7) is functionally connected to an auxiliary drive (9) which is provided for the drive of the generator (10) and also for the drive of the oil pump (13a), and
the coil-shaped pipe system (23) of the generator (10) is connected to a pre-heating circuit in order to heat the generator (10) more speedily to a suitable operating temperature in the event of cold external temperatures.

2. Construction machine according to claim 1, **characterized in that** the pipe system (23) is manufactured from a heat-conducting material, preferably steel, stainless steel, aluminum or copper.

3. Construction machine according to one of the preceding claims, **characterized in that** the pipe system (23) is a double casing on the outer surface of the generator (10).

4. Construction machine according to one of the preceding claims, **characterized in that** an oil tank (12) is provided that holds the hydraulic oil, wherein the oil tank (12) is additionally set up to hold the hydraulic oil from the hydraulic oil system (11).

5. Construction machine according to one of the preceding claims, **characterized in in that** a heat exchanger (20) is provided for the cooling of the hydraulic oil of the pipe system (23) and/or of the hydraulic oil of the hydraulic oil system (11).

6. Construction machine according to one of the preceding claims, **characterized in that** a regulating device (10b) is provided for the generator (10), wherein this regulating device (10b) is configured to regulate the output of the generator (10).

7. Construction machine according to claim 6, **characterized in that** a device (10c) is provided for monitoring the generator (10), wherein the device (10c) is formed to interact with the regulating device (10b).

8. Construction machine according to one of the preceding claims, **characterized in that** the pipe system (23) is integrated into a housing (24) of the generator (10).

## Revendications

1. Engin de travaux publics (1) avec un générateur électrique (10), l'engin de travaux publics (1) comprenant par ailleurs un système d'huile hydraulique (11) destiné à des fonctions hydrauliques, engin de travaux publics
dans lequel le système d'huile hydraulique (11) est prévu pour refroidir le générateur (10),
dans lequel le générateur (10) présente sur sa surface extérieure, pour le refroidissement, un système de conduite tubulaire (23),
dans lequel le système de conduite tubulaire (23) est raccordé au système d'huile hydraulique (11),
dans lequel une pompe à huile (13a) produisant de la pression est prévue dans le système d'huile hydraulique (11),
dans lequel la pompe à huile (13a) est configurée pour interagir avec le système d'huile hydraulique (11),
dans lequel la pompe à huile (13a), pour refroidir le générateur (10), est conçue pour, par l'intermédiaire du système d'huile hydraulique (11), refouler de l'huile à travers le système de conduite tubulaire (23) du générateur (10), qui y est raccordé,
dans lequel le générateur (10) est configuré pour être entraîné par un moteur à combustion interne ou moteur thermique (7),
dans lequel au moins un limiteur de pression (27) est prévu dans le système de conduite tubulaire (23),
et dans lequel le système de conduite tubulaire (23) présente une forme hélicoïdale,
**caractérisé en ce que**
le moteur à combustion interne (7) est relié fonctionnellement à un entraînement auxiliaire (9), qui est prévu aussi bien pour l'entraînement du générateur (10) que pour l'entraînement de la pompe à huile (13a) , et
le système de conduite tubulaire (23) de forme hélicoïdale du générateur (10) est raccordé à un circuit de préchauffage, pour, dans le cas de températures extérieures froides, échauffer le générateur (10) plus rapidement à une température de fonctionnement appropriée.

2. Engin de travaux publics selon la revendication 1, **caractérisé en ce que** le système de conduite tubulaire (23) est fabriqué en un matériau conducteur de la chaleur, de préférence de l'acier, de l'acier surfin ou acier spécial, de l'aluminium ou du cuivre.

3. Engin de travaux publics selon l'une des revendications précédentes, **caractérisé en ce que** le système de conduite tubulaire (23) est une enveloppe double à la surface extérieure du générateur (10).

4. Engin de travaux publics selon l'une des revendications précédentes, **caractérisé en ce qu'**il est prévu un réservoir d'huile (12) qui reçoit l'huile hydraulique, le réservoir d'huile (12) étant par ailleurs conçu pour recevoir l'huile hydraulique du système d'huile hydraulique (11).

5. Engin de travaux publics selon l'une des revendications précédentes, **caractérisé en ce que** pour le refroidissement de l'huile hydraulique du système de conduite tubulaire (23) et/ou de l'huile hydraulique du système d'huile hydraulique (11), il est prévu un échangeur de chaleur (20).

6. Engin de travaux publics selon l'une des revendications précédentes, **caractérisé en ce que** pour le générateur (10) il est prévu un dispositif de régulation (10b), qui est configuré pour réguler la puissance du générateur (10).

7. Engin de travaux publics selon la revendication 6, **caractérisé en ce qu'**il est prévu un dispositif (10c) pour assurer la surveillance du générateur (10), le dispositif (10c) étant conçu pour une interaction avec le dispositif de régulation (10b).

8. Engin de travaux publics selon l'une des revendications précédentes, **caractérisé en ce que** le système de conduite tubulaire (23) est intégré à un carter (24) du générateur (10).
